(19) Europäisches Patentamt
European Patent Office
Office européen des brevets

(11) **EP 2 985 626 B1**

(12) **EUROPÄISCHE PATENTSCHRIFT**

(45) Veröffentlichungstag und Bekanntmachung des Hinweises auf die Patenterteilung:
**10.01.2018   Patentblatt 2018/02**

(51) Int Cl.:
**G01S 13/74** *(2006.01)*        *G01S 13/76* *(2006.01)*

(21) Anmeldenummer: **15178060.8**

(22) Anmeldetag: **23.07.2015**

(54) **VERFAHREN ZUR SIMULTANEN DATENÜBERTRAGUNG UND ABSTANDSMESSUNG**

METHOD FOR SIMULTANEOUS DATA TRANSMISSION AND DISTANCE MEASUREMENT

PROCEDE DE TRANSMISSION DE DONNEES SIMULTANEE ET MESURE D'INTERVALLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2014   DE 102014111588**

(43) Veröffentlichungstag der Anmeldung:
**17.02.2016   Patentblatt 2016/07**

(73) Patentinhaber: **SICK AG**
**79183 Waldkirch/Breisgau (DE)**

(72) Erfinder:
• **Fischer, Martin**
**77887 Sasbachwalden (DE)**
• **Tschuch, Dr. Sebastian**
**79104 Freiburg (DE)**

(74) Vertreter: **Manitz Finsterwald Patentanwälte PartmbB**
**Martin-Greif-Strasse 1**
**80336 München (DE)**

(56) Entgegenhaltungen:
EP-B1- 2 244 098        WO-A1-2006/051119
WO-A1-2007/066859      US-A- 3 891 168
US-A- 4 965 583        US-A1- 2013 141 283

• JINGJING XIA ET AL: "3-5 GHz UWB Impulse Radio Transmitter and Receiver MMIC Optimized for Long Range Precision Wireless Sensor Networks", IEEE TRANSACTIONS ON MICROWAVE THEORY AND TECHNIQUES, IEEE SERVICE CENTER, PISCATAWAY, NJ, US, Bd. 58, Nr. 12, 1. Dezember 2010 (2010-12-01), Seiten 4040-4051, XP011339617, ISSN: 0018-9480, DOI: 10.1109/TMTT.2010.2083682
• Sigit Basuki Wibowo ET AL: "Time of Flight Ranging using Off-the-self IEEE802.11 WiFi Tags", , 28 May 2009 (2009-05-28), XP055185248, Retrieved from the Internet: URL:http://www.locon-eu.com/Documents/POC A Conference_CIT_Sigit.pdf [retrieved on 2015-04-22]

**Beschreibung**

Die vorliegende Erfindung betrifft ein Verfahren zur simultanen Datenübertragung und Abstandsmessung zwischen einer ersten Vorrichtung und zumindest einer zweiten Vorrichtung, wobei die erste Vorrichtung und die zweite Vorrichtung jeweils eine Datenübertragungseinrichtung und eine mit der Datenübertragungseinrichtung gekoppelte Steuereinheit aufweisen und wobei jede Steuereinheit einen vorbestimmten Systemtakt aufweist.

Derartige Verfahren kommen zum Beispiel bei fahrerlosen Transportsystemen oder Fördersystemen, insbesondere Hängefördersystemen, zum Einsatz. Bei Fördersystemen werden Förderelemente (im Falle von Hängefördersystemen Hängeförderer) entlang einer insbesondere vorbestimmten Wegstrecke (also zum Beispiel einer Schiene) bewegt. An bestimmte Punkten sollen oder werden dann bestimmte Aktionen, zum Beispiel das Aufnehmen oder Ablegen eines Guts aus einem beziehungsweise in ein Regal durchgeführt.

Zum Beispiel bei Fördersystemen, welche eine Vielzahl von Förderelementen umfassen, ist es notwendig, eine kontinuierliche Datenübertragung zwischen einer Basis des Fördersystems und den einzelnen Förderelementen zu ermöglichen, um z.B. Steuer- und Sensordaten zu übertragen.

Zudem muss das Fördersystem in der Lage sein, die Position der Förderelemente genau zu bestimmen. Bei bekannten Fördersystemen werden z.B. an dem Förderelement angebrachte Linearmesssensoren verwendet, die ortsfeste 1D- und 2D-Barcodes ablesen. Anhand der in dem Barcode codierten Daten kann die Position des Förderelementes entlang der Förderstrecke ermittelt werden.

Alternativ wird bei zum Beispiel bei einem fahrerlosen Transportsystem die Position des Fahrzeugs oder bei einem Fördersystem die Position des Förderelementes anhand einer Entfernungs- bzw. Abstandsmessung bestimmt, welche separat zu einer Datenübertragung vorgenommen wird. Die DE 10 2008 059 819 B4 offenbart dazu eine optische Entfernungs- bzw. Abstandsmessung und eine parallele Datenübertragung per Funk.

Eine Entfernungsmessung, welche auf einer Laufzeitmessung oder einer Triangulation von reflektiertem Licht beruht, ist aus der US 6,765,495 B1, der WO 99/60629 und der EP 1 980 870 A1 bekannt. Die US 2014/0009340 A1 beschreibt, zur Entfernungsmessung die zeitliche Position von Flanken eines empfangenen Signals mehrmals auszuwerten, um deren zeitliche Position genauer zu bestimmen.

Die EP 2 244 098 B1 offenbart ein Verfahren gemäß dem Oberbegriff des Anspruchs 1, bei welchem eine Distanz mittels Funkwellen ermittelt wird. Auch die WO 2007/066859 A1 beschreibt eine Abstandsmessung mittels Funkwellen. In der WO 2006/051119 A1 wird ein Verfahren zur Verbesserung der Abstandsmessung mittels Funksignalen offenbart. In Jingjing Xia et al. - "3-5 GHz UWB Impulse Radio Transmitter and Receiver MMIC Optimized for Long Range Precision Wireless Sensor Networks" (DOI: 10.1109/TMTT.2010.2083682) wird eine Abstandsmessung mittels Funksignalen und nachgelagertem "equivalent time sampling" vorgeschlagen. Die US 2013/0141283 A1 beschreibt die Ortung einer Funkeinrichtung.

Für eine Entfernungsmessung anhand von reflektiertem Licht ist immer eine Sichtverbindung zwischen den Vorrichtungen (also zum Beispiel des fahrerlosen Fahrzeugs oder den Förderelementen und einer ortsfesten Basisstation) bestehen, was nicht immer möglich oder praktikabel ist.

Bei der Verwendung von Barcodes kann es zur Verschmutzung und damit zu einer verschlechterten Lesbarkeit der Barcodes kommen. Zudem muss entlang des Fördersystems eine Vielzahl von Barcodes angeordnet sein, was einen erheblichen Aufwand bei der Montage und Instandhaltung nach sich zieht. Zum Ablesen der Barcodes sind zudem optische Scanner notwendig, die weitere Montage- und Instandhaltungsaufwand bedingen, insbesondere zur korrekten Ausrichtung der optischen Scanner.

Es ist die der Erfindung zugrundeliegende Aufgabe, ein Verfahren zur simultanen Datenübertragung und Abstandsmessung anzugeben, welches mit möglichst geringem Hardwareaufwand zu implementieren ist und zugleich eine hohe Genauigkeit der Abstandsmessung sicherstellt.

Diese Aufgabe wird durch ein Verfahren mit den Merkmalen des Anspruchs 1 gelöst.

Erfindungsgemäß wird dabei (i) von der ersten Vorrichtung an zumindest eine zweite Vorrichtung ein erstes Datenpaket und von der zweiten Vorrichtung an die erste Vorrichtung ein zweites Datenpaket übertragen oder (ii) von zumindest einer zweiten Vorrichtung an die erste Vorrichtung ein erstes Datenpaket und von der ersten Vorrichtung an die zweite Vorrichtung ein zweites Datenpaket übertragen. Anhand der übertragenen Datenpakete wird der Abstand zwischen der ersten Vorrichtung und der zweiten Vorrichtung ermittelt, wobei der zeitliche Versatz von Flanken der Datenpakete zu dem jeweiligen Systemtakt mehrmals gemessen wird. Dabei kann insbesondere die Laufzeit der Datenpakete zugrunde gelegt werden, wie es weiter unten erläutert werden wird.

Erfindungsgemäß sind die Vorrichtungen mittels eines Kommunikationsmediums verbunden.

Der Erfindung liegt dabei die Erkenntnis zugrunde, dass die ohnehin übertragenen Datensignale auch zur Abstandsmessung verwendet werden können. Ein zusätzlicher Hardwareaufwand, beispielsweise für einen separaten Empfänger zur Abstandsmessung, ist somit nicht erforderlich. Das erfindungsgemäße Verfahren lässt sich somit mit geringen Kosten durchführen und ermöglicht es, zusätzlich die benötigten Vorrichtungen klein und damit platzsparend auszubilden.

Die erste Vorrichtung kann ortsfest angeordnet sein, beispielsweise an einem Ende der Förderstrecke eines Hängefördersystems. Die erste Vorrichtung wird hier auch als "Master" oder Basis bezeichnet. Der Master steuert insbesondere die zweiten Vorrichtungen, also zum Beispiel die Hängeförderer.

Die zweiten Vorrichtungen werden auch als "Slaves" bezeichnet, wobei die Slaves in der Regel nur mit dem Master, d.h. der ersten Vorrichtung kommunizieren. Die zweiten Vorrichtungen sind beim betrachteten Beispiel an Hängeförderern angebracht und werden somit entlang der Förderstrecke verfahren. Insbesondere erstreckt sich das Kommunikationsmedium entlang der gesamten Förderstrecke.

Zur Abstandsmessung zwischen der ersten und einer der zweiten Vorrichtungen sendet beispielsweise die zweite Vorrichtung ein erstes Datenpaket an die erste Vorrichtung. Die erste Vorrichtung empfängt das erste Datenpaket und sendet an die zweite Vorrichtung ein zweites Datenpaket zurück. Das zweite Datenpaket ist insbesondere von dem ersten Datenpaket verschieden. Aus der Zeitdauer zwischen dem Versand des ersten Datenpakets und dem Empfang des zweiten Datenpakets kann die zweite Vorrichtung ihren Abstand zu der ersten Vorrichtung berechnen, wozu ihre Steuereinheit dann entsprechend ausgestaltet sein kann. Dazu ist der zweiten Vorrichtung insbesondere die Übertragungsgeschwindigkeit des Kommunikationsmediums und der Zeitbedarf der ersten Vorrichtung zwischen dem Empfang des ersten Datenpakets und dem Versand des zweiten Datenpakets bekannt.

Die Funktionen der ersten und zweiten Vorrichtung können bei der Abstandsmessung auch vertauscht sein.

Der Abstand zwischen der ersten und zweiten Vorrichtung bezieht sich dabei auf den Abstand entlang des Kommunikationsmediums.

Die exakte Bestimmung des Zeitbedarfs einer Vorrichtung für die Verarbeitung des ersten Datenpakets und die Versendung des zweiten Datenpakets trägt zur Genauigkeit der Abstandsmessung bei. Dabei ist es von Vorteil, die Steuereinheit als FPGA (Field Programmable Gate Array) auszubilden, da die in dem FPGA üblicherweise im Wesentlichen konstante Gatter- bzw. Logiklaufzeit auf einfache Weise bestimmbar ist und berücksichtigt werden kann, wodurch die Abstandsbestimmung genauer erfolgen kann.

Das Kommunikationsmedium dient der Übertragung der Datenpakete zwischen den Vorrichtungen und kann beispielsweise eine elektrisch leitende Schiene, eine Stromschiene, ein Hohlleiter oder ein Koaxialkabel sein. Bevorzugt erfolgt über das Kommunikationsmedium eine Breitbandkommunikation zwischen den Vorrichtungen. Dementsprechend kann eine Voll- oder Halbduplexkommunikation möglich sein.

Ein Datenpaket kann mittels eines Datensignals übertragen werden, wobei das Datensignal einzelne Datenbits umfassen kann. In Abhängigkeit des gewählten Übertragungsverfahrens kann ein Datenbit eine Flanke aufweisen oder alternativ ein Signalmuster mit einem definierten Anfang sein. Im Folgenden wird beispielhaft auf die Flanke von Datenbits Bezug genommen. Es versteht sich, dass anstelle der Flanke auch der Anfang bzw. der Phasenübergang eines jeweiligen Signalmusters verwendet werden kann.

Aufgrund von Übertragungsfehlern, die wegen elektromagnetischer Störungen (EMV-Störungen) auftreten können, kann die Datenübertragung eine Fehlerkorrektur, bevorzugt eine Vorwärts-Fehlerkorrektur (FEC), umfassen.

Auch können die Datenpakte einen Frame-Counter aufweisen, so dass jedes Datenpaket eindeutig identifizierbar und nur einmalig gültig ist. Auf diese Weise kann auch die Auswertung von Echos von Datenpaketen verhindert werden.

Die Datenpakete können eine Identifikationsnummer der das Datenpaket sendenden Vorrichtung und einen Zeitstempel der Sendezeit des Datenpakets enthalten. Neben dem bereits erwähnten Frame-Counter kann das Datenpaket auch Statusinformationen umfassen, die angeben, ob das Datenpaket eine Anfrage oder eine Antwort enthält (Request / Answer Flag). Ferner kann das Datenpaket auch zusätzliche Daten enthalten.

Erfindungsgemäß wird also ein einziger Kommunikationskanal, nämlich der Kommunikationskanal des Kommunikationsmediums, verwendet, um sowohl die Datenübertragung als auch die Abstandsmessung zu realisieren.

Insbesondere können die Datensignale eine Datenrate von 100 Mbit/s aufweisen. Dies hat den Vorteil, dass zur Abstandsmessung eine Vielzahl von Datenbits zur Auswertung zur Verfügung stehen. Die Abstandsmessung kann folglich sowohl besonders schnell als auch besonders genau erfolgen.

Erfindungsgemäß umfasst die Bestimmung eines ermittelten Versatzes eine statistische Auswertung einer vorbestimmten Anzahl von Werten des gemessenen Versatzes der Flanken des Datenpakets zu dem Systemtakt. Dies bedeutet, dass der Versatz der Flanken des Datensignals des Datenpäkets auf die oben beschriebene Weise mehrmals, beispielsweise 512, 1.024 oder 2.048 mal gemessen wird und anschließend eine statistische Auswertung der 512, 1.024 oder 2.048 Messwerte erfolgt, aus der sich der ermittelte Versatz ergibt. Aufgrund der statistischen Auswertung einer Vielzahl von Messwerten werden Messungenauigkeiten minimiert, so dass der ermittelte Versatz eine deutlich erhöhte Genauigkeit im Vergleich zu dem einzelnen gemessenen Versatz aufweist.

Die Verschiebung der Systemtakte gegeneinander kann dabei derart gewählt werden, dass sich die Systemtakte beispielsweise um den 1.024-ten Teil der zeitlichen Länge eines Systemtakts gegeneinander verschieben. Dies ermöglicht es, ein empfangenes Datenbit an 1.024 Relativpositionen zu einer Flanke des Systemtakts abzutasten.

Ebenfalls erfindungsgemäß umfasst die statistische Auswertung die Zusammenfassung der vorbestimmten Anzahl von Werten des gemessenen Versatzes in einem Histogramm, wobei die Bestimmung des ermittelten Versatzes die Ermittlung des Schwerpunkts des Histogramms umfasst. Aus den einzelnen Werten für den gemessenen Versatz wird also ein Histogramm gebildet, um die tatsächliche Position der Flanke, d.h. den ermittelten Versatz genauer zu bestimmen. Es wird der Schwerpunkt des Histogramms ermittelt, da am Schwerpunkt die Wahrscheinlichkeit am größten ist, dass dort die tatsächliche Position der Flanke liegt.

Das Histogramm kann zudem um die Verschiebung der Systemtakte der ersten und zweiten Vorrichtung kompensiert sein. Dies bedeutet, die zeitlichen Positionen der Flanken des Datensignals können in das Histogramm auf der Grundlage der kompensierten Systemtakte eingetragen werden.

Die Anzahl der in das Histogramm einzutragenden Messwerte kann variabel gestaltet werden, dies bedeutet, das Histogramm kann breit oder schmal gewählt werden. Eine Auswahl der Anzahl der Messwerte kann in Relation zur Messwertgüte erfolgen. Zudem kann die Messwertgüte auch für einen der statistischen Auswertung nachgeschalteten Kalman-Filter verwendet werden.

Weitere vorteilhafte Ausführungsformen der Erfindung sind der Beschreibung, den Zeichnungen sowie den Unteransprüchen zu entnehmen.

Gemäß einer vorteilhaften Ausführungsform enthält das erste Datenpaket Nutzdaten. Das zweite Datenpaket kann ebenfalls Nutzdaten enthalten, die von den Nutzdaten des ersten Datenpakets verschieden sein können. Nutzdaten sind zusätzliche Daten in dem Datenpaket, die ohnehin zwischen den Vorrichtungen ausgetauscht werden müssen. Die Nutzdaten können z.B. Steuerdaten für ein Förderelement oder Sensorinformationen des Förderelementes sein.

Alternativ enthält das erste und/oder das zweite Datenpaket vorbestimmte Daten. Anstelle von Nutzdaten kann das erste und/oder zweite Datenpaket auch konstante, d.h. vorbestimmte, Daten enthalten oder nur Einzelpulse aufweisen. Beispielsweise können die vorbestimmten Daten eine binäre Folge von Nullen und Einsen sein.

Gemäß einer weiteren vorteilhaften Ausführungsform werden der Systemtakt der ersten Vorrichtung und der Systemtakt der zweiten Vorrichtung zeitlich gegeneinander verschoben, insbesondere durch eine Auswahl unterschiedlicher Frequenzen für die Systemtakte der ersten und zweiten Vorrichtung. Aufgrund der Verschiebung der Systemtakte werden aufeinanderfolgende Datenbits eines empfangenen Datenpakets jeweils an unterschiedlichen Positionen relativ zu dem Systemtakt der empfangenden Vorrichtung empfangen. Dies bedeutet, eine Flanke eines Datenbits (oder der Beginn des Signalmusters des Datenpakets) weisen jeweils eine bestimmte Phasenlage bzw. einen bestimmten zeitlichen Versatz zu der Flanke des Systemtakts der jeweiligen Vorrichtung auf. Die Flanke eines darauffolgenden Datenbits des Datensignals weist aufgrund der Verschiebung einen anderen Versatz zu der Flanke des Systemtakts auf, als die vorhergehende Flanke. Dies ermöglicht es, ein beispielsweise rechteckförmiges, sich wiederholendes Datensignal an unterschiedlichen Relativpositionen bezüglich der Flanken der Datenbits und damit genauer abzutasten. Auf diese Weise wird die Genauigkeit der Abstandsmessung erhöht.

Insbesondere kann der Unterschied zwischen den Frequenzen der Systemtakte der ersten und der zweiten Vorrichtung (d.h. die Verstimmung) kleiner als 100 ppm, also kleiner als 0,1 Promille, sein. Die Verstimmung kann bekannt bzw. vorbestimmt sein oder im Betrieb beispielsweise durch Uhrzeitsynchronisation zwischen der ersten und der zweiten Vorrichtung gemessen werden.

Wenn die Frequenzen der Systemtakte unterschiedlich sind, kommt es zu einer kontinuierlichen Verschiebung (Schwebung) der Systemtakte.

Die erste und die zweite Vorrichtung können identisch ausgeführt sein. In diesem Fall kann es ausreichen, dass Fertigungstoleranzen der Bauteile zu einer ausreichenden Verschiebung der Systemtakte gegeneinander führen.

Gemäß einer weiteren vorteilhaften Ausführungsform wird das übertragene Datenpaket beim Empfang in der ersten und/oder der zweiten Vorrichtung mit einer variablen Verzögerung versehen. Insbesondere findet eine Verzögerung in derjenigen Vorrichtung statt, die die Abstandsmessung vornimmt. Die Verzögerung kann alternativ oder zusätzlich zu der bereits erwähnten Verschiebung der Systemtakte verwendet werden, um einen Zeitversatz der Flanken der Datenbits zu den Flanken des jeweiligen Systemtakts zu erzeugen. Beispielsweise kann die Verzögerung nach Art eines variablen I/O-Delays bei einem DDR3-RAM erfolgen.

Die Verzögerung kann variiert werden, um unterschiedliche Phasenlagen der Flanken der Datenbits zu den Flanken des Systemtakts zu erreichen, es wird also ein künstlicher Jitter erzeugt.

Bevorzugt werden die Größe der zeitlichen Verschiebung und/oder die Länge der Verzögerung während der Durchführung des Verfahrens geändert. Dies ermöglicht eine adaptive Anpassung der Abtastzeitpunkte, wobei beispielsweise die Verzögerung verringert werden kann, wenn der Empfangspegel niedrig ist. Alternativ kann der Abtastzeitpunkt jeweils auch vom Signal-Rausch-Verhältnis (SNR) abhängig gemacht werden.

Besonders bevorzugt wird ein von der Datenübertragungseinrichtung empfangenes Datenpaket überabgetastet, insbesondere zumindest 8-fach, bevorzugt zumindest 16-fach. Aufgrund der Überabtastung können die Bestimmung der Position der Flanke eines Datenbits und damit die Bestimmung der Ankunftszeit der jeweiligen Flanke deutlich genauer erfolgen. Dies ermöglicht eine genauere Bestimmung des Abstands zwischen der ersten und der zweiten Vorrichtung. Insbesondere erfolgt eine Digitalisierung bzw. Abtastung des jeweils empfangenen Datensignals mittels eines Ein-Bit-A/D-Wandlers (z.B. mittels des Eingangs-Komparators des FPGAs). Das erste und zweite Datensignal können beispielsweise bei einer Datenrate von 150 MHz mit einer Abtastfrequenz von 2,4 GHz abgetastet werden.

Besonders bevorzugt wird der zeitliche Versatz von Flanken des Datenpakets zu dem Systemtakt mehrmals gemessen. Wie bereits erwähnt, kann anstelle der Flanken von Datenbits des Datenpakets auch generell der Beginn des Datensignals oder ein Phasenübergang innerhalb des Datenpakets gemessen werden. Dies gilt insbesondere für breitbandige Übertragungsverfahren ohne Flanken. Im Folgenden wird aber weiterhin nur das Vorgehen bei Flanken erläutert. Für den Beginn des Datensignals gelten diese Ausführungen entsprechend.

Für eine besonders genaue Abstandsmessung ist eine möglichst genaue Bestimmung der Ankunftszeit der Flanken des Datensignals notwendig. Aufgrund der mehrmaligen Ermittlung und der Verschiebung der Systemtakte werden aufeinanderfolgende Datenbits an unterschiedlichen Zeitpunkten bezüglich des Systemtakts der empfangenden Vorrichtung abgetastet. Die Datenbits werden dabei von der sendenden Vorrichtung in ihrem Systemtakt gesendet und wiederholen sich demnach periodisch. Aufgrund der Abtastung mehrerer periodisch nacheinander folgender Datenbits kann aufgrund der Verschiebung der Systemtakte eine genauere Abtastung des Datensignals erfolgen, als dies eigentlich aufgrund der Abtastfrequenz möglich wäre. Damit kann eine Sub-Sample-Genauigkeit erreicht werden.

Aufgrund der Abtastung mehrerer aufeinanderfolgender Datenbits kann der Versatz der Flanken des Datenstroms bis auf wenige Pikosekunden genau ermittelt werden, wodurch sich eine Messgenauigkeit für den Abstand zwischen der ersten und der zweiten Vorrichtung von wenigen Millimetern ergibt. Dabei kann der Abstand zwischen den beiden Vorrichtungen mit einer umso größeren Messgenauigkeit bestimmt werden, umso genauer der Versatz zwischen den Flanken ermittelt wird.

Zur Bestimmung des zeitlichen Versatzes der Flanken des Datensignals können prinzipiell sämtliche Datenbits des Datensignals herangezogen werden, was zu einer in kurzer Zeit durchführbaren Messung des zeitlichen Versatzes führt.

Gemäß einer weiteren bevorzugten Ausführungsform der Erfindung umfasst die Bestimmung des ermittelten Versatzes die Berechnung einer linearen Regression zwischen den Schwerpunkten zweier oder mehrerer Histogramme. Der ermittelte Versatz und daraus der Abstand zwischen der ersten Vorrichtung und der zweiten Vorrichtung können auf diese Weise noch genauer bestimmt werden. Auch können mehrere Werte des durch lineare Regression bestimmten ermittelten Versatzes wiederum gemittelt werden, um die Genauigkeit nochmals zu steigern.

Gemäß einer weiteren vorteilhaften Ausführungsform wird eine Übertragungsgeschwindigkeit des Kommunikationsmediums und insbesondere der Dielektrizitätswert des Kommunikationsmediums ermittelt. Für eine möglichst exakte Abstandsmessung ist die Kenntnis der Übertragungsgeschwindigkeit des Kommunikationsmediums wichtig. Die Übertragungsgeschwindigkeit eines elektrischen bzw. elektromagnetischen Signals hängt dabei von dem Dielektrizitätswert des Kommunikationsmediums ab, wobei sich der Dielektrizitätswert aufgrund von Umwelteinflüssen, wie der Umgebungstemperatur oder mechanischen Einflüssen, ändern kann. Wird die Übertragungsgeschwindigkeit im Betrieb gemessen, können Schwankungen der Übertragungsgeschwindigkeit kompensiert werden. Bevorzugt erfolgt eine wiederholte Messung des Dielektrizitätswerts des Kommunikationsmediums durch die zweite Vorrichtung.

Bevorzugt beginnt eine Datenübertragung nur dann, wenn keine weitere Datenübertragung über das Kommunikationsmedium erfolgt. Es kann somit eine Kollisionsüberwachung erfolgen, die notwendig sein kann, da mehrere Vorrichtungen sich einen gemeinsamen Kommunikationskanal teilen. Durch die Kollisionsüberwachung wird sichergestellt, dass zu einem Zeitpunkt jeweils nur eine Vorrichtung Datenpakete über das Kommunikationsmedium überträgt. Insbesondere wird das Carrier Sense Multiple Access (CSMA)-Verfahren verwendet, wobei bevorzugt die Verfahren CSMA/CA (Carrier Sense Multiple Access/Collision Avoidance) und CSMA/CD (Carrier Sense Multiple Access/Collision Detection) zum Einsatz kommen. Alternativ oder zusätzlich können Kollisionen durch die Vergabe von Zeitfenstern (Timeslots) für jede Vorrichtung vermieden werden.

Gemäß einer weiteren vorteilhaften Ausführungsform der Erfindung wird der Abstand zwischen der ersten Vorrichtung und der zweiten Vorrichtung sowohl von der ersten Vorrichtung als auch von der zweiten Vorrichtung ermittelt. Der jeweils ermittelte Abstand kann dann der jeweils anderen Vorrichtung mitgeteilt werden. Aus den beiden ermittelten Abstände kann beispielsweise ein Mittelwert berechnet werden. Alternativ können die Abstände zur gegenseitigen Plausibilisierung verwendet werden.

Insbesondere können mehrere ortsfeste erste Vorrichtungen vorgesehen sein, wobei die zweite Vorrichtung ihren Abstand zu mehreren ersten Vorrichtungen bestimmen kann. Ist der Abstand der ersten Vorrichtungen zueinander bekannt, können die von der zweiten Vorrichtung gemessenen Abstände zu den ersten Vorrichtungen zur Plausibilisierung der gemessenen Abstände dienen, wenn eine Überbestimmung des Abstandes vorliegt. Insbesondere können die weiteren ersten Vorrichtungen auch als Signalverstärker dienen, d.h. eine Repeaterfunktion erfüllen.

Alternativ können auch mehrere zweite Vorrichtungen ihre Abstände zueinander und/oder zu der ersten Vorrichtung bestimmen und zur Plausibilisierung nutzen. Dabei kann die Plausibilisierung zur Erzeugung eines "sicheren" Positionswerts herangezogen werden. Solch eine sichere Position kann in Anlagen, in denen sich Personen aufhalten, gefordert sein. Herkömmlicherweise werden zur Erzeugung des sicheren Positionswerts Signale mehrerer Abstands- und Geschwindigkeitsgeber von einer zusätzlichen Steuereinheit ausgewertet. Durch die Plausibilisierung mittels mehrerer erster und/oder zweiter Vorrichtungen können sowohl die zusätzliche Steuereinheit als auch die Abstands- und Geschwindigkeitsgeber entfallen.

Gemäß einer weiteren vorteilhaften Ausführungsform wird in Abhängigkeit des ermittelten Abstandes ein vorbestimmter (fiktiver) Zusatzabstand zu dem ermittelten Abstand addiert. Bei dem Zusatzabstand handelt es sich um einen Positionsoffset, der zur besseren Darstellbarkeit von bestimmten Streckenabschnitten des Kommunikationsmediums bzw. der Förderstrecke dient. Die Streckenabschnitte können insbesondere durch Weichen abgetrennt sein.

Der Positionsoffset kann von der Steuereinheit automatisch zu dem ermittelten Abstand addiert werden, wenn ein vorbestimmter Abstand der zweiten Vorrichtung zu der ersten Vorrichtung ermittelt wird. Der Positionsoffset kann auch mittels eines Datenpakets den zweiten Vorrichtungen mitgeteilt werden. Alternativ können beim Bewegen der zweiten Vorrichtung entlang der Förderstrecke angeordnete Magnete mittels Hall-Sensoren detektiert werden, wodurch die Addition des Positionsoffsets aktiviert wird.

Wird ein vorbestimmter Abstand der zweiten Vorrichtung zu der ersten Vorrichtung ermittelt, kann auch ein vorbestimmtes Steuersignal, das z.B. zum Abwerfen einer Last des Hängeförderers führt, aktiviert werden. Auf diese Weise können vorbestimmte Aktionspositionen definiert werden.

Gemäß einer weiteren vorteilhaften Ausführungsform werden vor der Ermittlung des Abstandes zwischen der ersten Vorrichtung und der zweiten Vorrichtung die Systemzeiten der ersten und der zweiten Vorrichtung synchronisiert. Die Synchronisation dient dazu, die absolute Übertragungszeit eines Datenbits von einer Vorrichtung zur anderen bestimmbar zu machen. Anhand der absoluten Übertragungszeit ist eine grobe Bestimmung des Abstands zwischen der ersten und der zweiten Vorrichtung möglich. Durch die zusätzliche Bestimmung des ermittelten Versatzes kann auf der groben Bestimmung aufsetzend eine sehr genaue Bestimmung des Abstandes vorgenommen werden. Die Ermittlung der absoluten Übertragungszeit dient also der Eliminierung von Mehrdeutigkeiten, da allein anhand des Versatzes der Flanken des Datensignals zu den Flanken des Systemtakts noch kein absoluter Abstand berechnet werden kann.

Die Synchronisation sorgt dafür, dass zwei Zähler für die jeweilige Systemzeit in der ersten und der zweiten Vorrichtung den gleichen Zählerstand aufweisen. Nach einem Synchronisationsvorgang driften die Zählerstände voneinander weg, da die Systemtakte unabhängig sind (sogenannte "free-running clocks").

Bevorzugt werden zur Synchronisierung der Systemzeiten von der ersten und der zweiten Vorrichtung an die jeweils andere Vorrichtung eine erste Nachricht, welche ihren Sendezeitpunkt bezüglich der Systemzeit der jeweils sendenden Vorrichtung enthält, und eine zweite Nachricht, welche den Empfangszeitpunkt der ersten Nachricht bezüglich der jeweils die erste Nachricht empfangenden Vorrichtung enthält, versandt. Im Folgenden werden die erste Nachricht der ersten Vorrichtung mit S1, die erste Nachricht der zweiten Vorrichtung mit S2, die zweite Nachricht der ersten Vorrichtung mit E1 und die zweite Nachricht der zweiten Vorrichtung mit E2 bezeichnet. Auch die in der jeweiligen Nachricht enthaltenen Sende- oder Empfangszeitpunkte werden der Einfachheit halber im Folgenden mit S1, S2, E1 bzw. E2 bezeichnet. Beispielsweise wird also der Sendezeitpunkt der ersten Nachricht der ersten Vorrichtung entsprechend der Nachricht, mit der er übermittelt wird, als S1 bezeichnet. Der Sendezeitpunkt der ersten Nachricht der zweiten Vorrichtung, die mit der ersten Nachricht der zweiten Vorrichtung übermittelt wird, wird mit S2 bezeichnet. Der Empfangszeitpunkt der von der zweiten Vorrichtung versendeten ersten Nachricht an der ersten Vorrichtung wird als E1 bezeichnet (Er wird mit der Nachricht E1 von der ersten an die zweite Vorrichtung übermittelt). Entsprechend wird der Empfangszeitpunkt der von der ersten Vorrichtung versendeten ersten Nachricht an der zweiten Vorrichtung als E2 bezeichnet (Er wird mit der zweiten Nachricht E2 der zweiten Vorrichtung von der zweiten an die erste Vorrichtung übermittelt).

Alternativ können die Nachrichten der ersten Vorrichtung und der zweiten Vorrichtung auch vertauscht werden.

Die Synchronisierung der Systemzeiten kann beispielsweise nach jeder Bestimmung des ermittelten Versatzes und/oder periodisch nach Ablauf einer vorbestimmten Zeitdauer erfolgen. Bevorzugt werden die ersten Nachrichten im Wesentlichen gleichzeitig gesendet. Dies ist nach zumindest einer ersten vorangegangenen Synchronisierung möglich.

Gemäß einer weiteren vorteilhaften Ausführungsform wird ein Versatz der Systemzeiten der ersten und der zweiten Vorrichtung nach der Formel $[(E2-S1)+(S2-E1)]/2$ berechnet. Der Versatz der Systemzeiten, der auch als Offset bezeichnet wird, ist berechenbar, da die erste und die zweite Vorrichtung jeweils Kenntnis von vier Zeitpunkten hat. Beispielhaft sei dies nachfolgend für die erste Vorrichtung erläutert, wobei sich die Zeitpunkte immer auf die Systemzeit der jeweiligen Vorrichtung beziehen und davon ausgegangen wird, dass die erste Vorrichtung die Nachrichten S1 und E1 sendet.

Der ersten Vorrichtung ist der Zeitpunkt bekannt, an welchem sie die erste Nachricht versandt hat (S1). Weiterhin empfängt die erste Vorrichtung von der zweiten Vorrichtung den Sendezeitpunkt der ersten Nachricht der zweiten Vorrichtung (S2). Auch der Empfangszeitpunkt der ersten Nachricht der zweiten Vorrichtung ist der ersten Vorrichtung bekannt (E1). Schließlich wird der ersten Vorrichtung von der zweiten Vorrichtung noch der Empfangszeitpunkt der ersten Nachricht der ersten Vorrichtung bei der zweiten Vorrichtung mitgeteilt (E2).

Es ergeben sich somit zwei Gleichungen:

$$(1)\ E2\text{-}S1 = \text{Offset} + \text{Übertragungszeit},$$

und

$$(2)\ E1\text{-}S2 = \text{Übertragungszeit} - \text{Offset}.$$

Es wird davon ausgegangen, dass die Übertragungszeit von der ersten zur zweiten Vorrichtung gleich der Übertragungszeit von der zweiten zur ersten Vorrichtung ist. Dementsprechend können die beiden obigen Formeln nach dem Offset, d.h. dem Versatz der Systemzeiten, aufgelöst werden. Folglich ergibt sich für den Offset die Formel [(E2-S1)+(S2-E1)]/2. Somit ist der Versatz der Systemzeiten durch den Austausch von vier Nachrichten bestimmbar. Die Nachrichten werden mittels des jeweiligen Datensignals übertragen.

Bevorzugt wird die Systemzeit der ersten oder der zweiten Vorrichtung um diesen Versatz korrigiert. Nach der Korrektur sind die Systemzeiten im Wesentlichen identisch und die Synchronisation ist abgeschlossen.

Besonders bevorzugt wird der ermittelte Versatz, d.h. der Sub-Sample-Versatz, zu den Empfangszeitpunkten (E1, E2) der ersten Nachrichten addiert. Auf diese Weise lässt sich die Genauigkeit der Synchronisation der Systemzeiten nochmals steigern. Insbesondere wird der ermittelte Versatz als Nachkommastelle an die Empfangszeitpunkte (E1, E2) bei deren Übertragung angefügt.

Bei der Durchführung des Verfahrens kann beispielsweise zunächst eine Synchronisation der Systemzeiten der ersten und zweiten Vorrichtung stattfinden. Anschließend erfolgt aufgrund der kontinuierlichen Verschiebung der Systemtakte gegeneinander eine Abtastung von z.B. 1.024 Datenbits an 1.024 verschiedenen Positionen innerhalb eines Takts des Systemtakts. Anhand einer statistischen Auswertung der 1.024 Werte für den gemessenen Versatz wird der ermittelte Versatz bestimmt, wobei die Bestimmung des Abstands zwischen der ersten Vorrichtung und der zweiten Vorrichtung anhand einer linearen Interpolation zwischen zwei Werten des ermittelten Versatzes erfolgt. Dabei kann der Zeitpunkt der Synchronisierung berücksichtigt werden.

Bevorzugt kann auch anstelle der linearen Interpolation zwischen zwei Histogrammauswertungen eine lineare Approximation aus mehreren, beispielsweise 8 oder 16, Histogrammauswertungen mittels eines Least-Squares-Schätzers erfolgen. Auf diese Weise kann der statistische Messfehler reduziert werden.

Aufgrund der hohen Datenrate des Datensignals und der Verwendung der Nutzdaten zur Bestimmung des ermittelten Versatzes (und damit auch zur Bestimmung des Abstandes zwischen der ersten und der zweiten Vorrichtung) ist eine äußerst schnelle und genaue Bestimmung des Abstandes ohne eine Unterbrechung der Datenübertragung möglich. Der Abstand kann beispielsweise innerhalb von weniger als einer Millisekunde mit Millimetergenauigkeit bestimmt werden.

Die Erfindung betrifft weiterhin ein System zur simultanen Datenübertragung und Abstandsmessung mit einer ersten Vorrichtung und zumindest einer zweiten Vorrichtung, wobei die erste Vorrichtung und die zweite Vorrichtung jeweils eine Datenübertragungseinrichtung und eine mit der jeweiligen Datenübertragungseinrichtung gekoppelte Steuereinheit aufweisen, wobei die Steuereinheit jeweils mit einem vorbestimmten Systemtakt betreibbar ist und die Vorrichtungen mittels eines Kommunikationsmediums verbunden sind. Das System zeichnet sich dadurch aus, (i) dass die erste Vorrichtung ausgebildet ist, an zumindest eine zweite Vorrichtung ein erstes Datenpaket zu übertragen, und die zweite Vorrichtung ausgebildet ist, an die erste Vorrichtung ein zweites Datenpaket zu übertragen oder (ii) dass zumindest eine zweite Vorrichtung ausgebildet ist, an die erste Vorrichtung ein erstes Datenpaket zu übertragen und die erste Vorrichtung ausgebildet ist, an die zweite Vorrichtung ein zweites Datenpaket zu übertragen, wobei die Steuereinheit der ersten und/oder zweiten Vorrichtung ausgebildet ist, anhand der übertragenen Datenpakete den Abstand zwischen der ersten Vorrichtung und der zweiten Vorrichtung zu ermitteln.

Ferner betrifft die Erfindung ein Transportsystem, insbesondere ein Fördersystem, umfassend ein System der oben beschriebenen Art und zumindest ein Förderelement. Das Transportsystem zeichnet sich dadurch aus, dass die zweite Vorrichtung an dem Förderelement angebracht ist, die erste Vorrichtung ortsfest ist und die erste und die zweite Vorrichtung mittels eines Kommunikationsmediums miteinander verbunden sind. Im Falle eines Hängefördersystems sind die Förderelemente Hängeförderer.

Bevorzugt ist das Kommunikationsmedium eine elektrisch mit dem Förderelement verbundene Stromschiene. Die Stromschiene kann dabei eine mehrfache Aufgabe erfüllen. Zum einen kann sie das Förderelement mit elektrischer Energie versorgen und zugleich eine Datenkommunikation mit dem Förderelement sicherstellen. Weiterhin kann sie als mechanische Aufhängung und/oder Führung für das Förderelement dienen und eine Abstandsmessung gestatten.

Insbesondere für schienengebundene Fördersysteme eignet sich eine Datenübertragung per Stromschiene besonders, da die Förderelemente entlang des von der Stromschiene vorgegebenen Weges verfahren. Somit kann eine Datenverbindung mit dem Förderelement dauerhaft aufrechterhalten werden. Aufgrund der in Verbindung mit der Datenübertragung möglichen Abstandsmessung und damit Positionsbestimmung des Förderelementes können zusätzliche Mittel zur Positionsbestimmung bei dem Förderelement entfallen. Das Förderelement kann somit kostengünstiger und damit wirtschaftlich hergestellt und betrieben werden.

Im Übrigen gelten für das erfindungsgemäße System und das erfindungsgemäße Transportsystem die für das erfindungsgemäße Verfahren getroffenen Aussagen, insbesondere hinsichtlich der Vorteile und besonderen Ausgestaltungen.

Nachfolgend wird die Erfindung rein beispielhaft unter Bezugnahme auf die Zeichnungen beschrieben.

Fig. 1   zeigt eine schematische Darstellung eines erfindungsgemäßen Transportsystems;

Fig. 2   zeigt die Übermittlung von Nachrichten zur Synchronisation der Systemzeiten der ersten und zweiten Vorrichtung;

Fig. 3   dient der Verdeutlichung der Abtastung mehrerer Flanken eines Datensignals; und

Fig. 4   zeigt ein Histogramm mit der Häufigkeit von Werten des gemessenen Versatzes zur Bestimmung des ermittelten Versatzes.

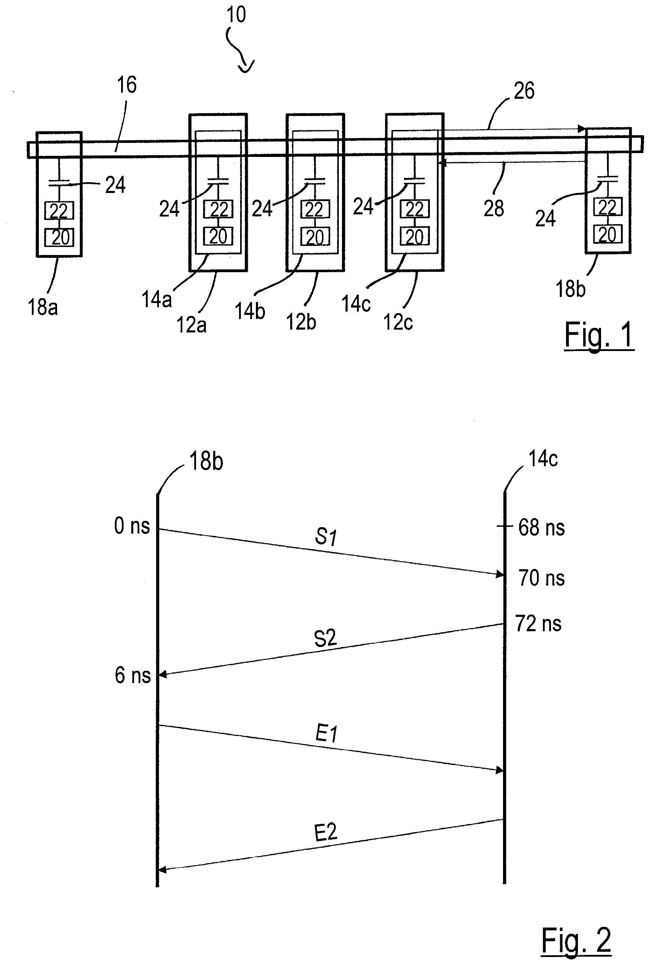

Fig. 1 zeigt schematisch ein Transportsystem, nämlich ein Hängefördersystem 10 mit drei Hängeförderern 12a, 12b, 12c. Jeder der Hängeförderer 12 umfasst eine zweite Vorrichtung 14a, 14b, 14c. Die Hängeförderer 12 sind an einer (nicht gezeigten) Schiene mechanisch aufgehängt und sind zur Stromversorgung elektrisch mit einer Stromschiene 16 verbunden. An den Enden der Stromschiene 16 sind jeweils erste Vorrichtungen 18a, 18b angeordnet. Die ersten Vorrichtungen 18a, 18b sind ortsfest an der Stromschiene 16 angebracht. Die zweiten Vorrichtungen 14a, 14b, 14c sind hingegen von den Hängeförderern 12 entlang der Stromschiene 16 verfahrbar.

Die zweiten Vorrichtungen 14a, 14b, 14c und die ersten Vorrichtungen 18a, 18b umfassen jeweils eine Steuereinheit 20 und eine elektrisch mit der Steuereinheit 20 verbundene Datenübertragungseinheit 22. Die Datenübertragungseinheit 22 ist jeweils mittels eines Kondensators 24 mit der Stromschiene 16 gekoppelt, so dass die Datenübertragungseinheit 22 hochfrequente elektrische Signale mit der Stromschiene 16 austauschen kann. Die Stromschiene 16 dient somit als Kommunikationsmedium zwischen den ersten und zweiten Vorrichtungen 18a, 18b, 14a, 14b, 14c.

Über die Stromschiene 16 überträgt beispielhaft die zweite Vorrichtung 14c ein erstes Datenpaket, welches ein erstes Datensignal 26 aus Rechteckpulsen zur Codierung von Nutzdaten umfasst, an die erste Vorrichtung 18b. Die erste Vorrichtung 18b antwortet darauf mit einem zweiten Datenpaket, welches ein von dem ersten Datensignal 26 verschiedenes zweites Datensignal 28 aus Rechteckpulsen zur Codierung von weiteren Nutzdaten umfasst.

Aus der Zeitdauer zwischen dem Aussenden des ersten Datenpakets und dem Empfang des zweiten Datenpakets ermittelt die zweite Vorrichtung 14c ihren Abstand zu der ersten Vorrichtung 18b. Dazu ist die zweite Vorrichtung 14c zusätzlich ausgestaltet, den Dielektrizitätswert der Stromschiene 16 zu messen und damit die Übertragungsgeschwindigkeit der Datenpakete zu bestimmen. Grundsätzlich kann der Dielektrizitätswert der Stromschiene auch von der ersten Vorrichtung bestimmt werden oder von einem Benutzer von außen in das System eingegeben werden.

Alternativ oder zusätzlich kann die zweite Vorrichtung 14c auch ihren Abstand zu der weiteren ersten Vorrichtung 18a und/oder zu weiteren zweiten Vorrichtungen 14a, 14b ermitteln. In diesem Fall tauscht die zweite Vorrichtung 14c Datenpakete mit der jeweiligen ersten und/oder zweiten Vorrichtung 18a, 14a, 14b aus.

Um eine möglichst genau Ermittlung des Abstandes zwischen der ersten und zweiten Vorrichtung 18b, 14c zu gestatten, können die Systemtakte der Steuereinheiten 20 der ersten Vorrichtung 18b und der zweiten Vorrichtung 14c geringfügig gegeneinander verschoben sein.

Zur Angleichung der Systemzeiten der ersten Vorrichtung 18b und der zweiten Vorrichtung 14c werden die in Fig. 2 schematisch dargestellten Nachrichten zwischen den Vorrichtungen 18b, 14c übertragen. Bei dem in Fig. 2 dargestellten Beispiel sind die Systemzeiten der ersten und zweiten Vorrichtung 18b, 14c um 68 Nanosekunden (ns) versetzt, d.h. der Offset beträgt 68 ns. Die Übertragungsdauer für eine Nachricht über den Kanal 28 beträgt in dem Beispiel von Fig. 2 zwei Nanosekunden. Es versteht sich, dass diese Zeitdauern lediglich der Veranschaulichung dienen und bei der realen Ausbildung der Erfindung die Zeitdauern deutlich unterschiedlich sein können.

Zum Zeitpunkt Null sendet die in Fig. 2 auf der linken Seite dargestellte erste Vorrichtung 18b an die rechterhand dargestellte zweite Vorrichtung 14c eine erste Nachricht S1, die die Sendezeit (0 ns) enthält. Diese Nachricht wird 2 ns später von der zweiten Vorrichtung 14c empfangen, wobei zu diesem Zeitpunkt die Systemzeit der zweiten Vorrichtung 14c bei 70 ns liegt. Bei 72 ns gemäß der Systemzeit der zweiten Vorrichtung 14c übermittelt die zweite Vorrichtung 14c ebenfalls eine erste Nachricht S2 an die erste Vorrichtung 18b, welche wiederum 2 ns später bei der Systemzeit 6 ns der ersten Vorrichtung 18b dort eintrifft.

Anschließend überträgt die erste Vorrichtung 18b eine zweite Nachricht E1 an die zweite Vorrichtung 14c, in welcher der zweiten Vorrichtung 14c mitgeteilt wird, dass die Nachricht S2 bei Systemzeit 6 ns empfangen wurde. Ferner übermittelt die zweite Vorrichtung 14c die zweite Nachricht E2 an die erste Vorrichtung 18b, und teilt der ersten Vorrichtung 18b mit, dass die erste Nachricht S1 bei Systemzeit 70 ns empfangen wurde. Die Zeitpunkte der Absendung der zweiten Nachrichten E1, E2 spielen keine Rolle und sind in Fig. 2 nicht genauer angegeben.

Anschließend berechnet die erste Vorrichtung 18b den Offset gemäß der Formel Offset = [(E2-S1)+(S2-E1)]/2, aus welcher sich der Offset von 68 ns ergibt ([(70 ns - 0 ns) + (72 ns - 6 ns)] / 2). Abschließend stellt die erste Vorrichtung 18b ihre Systemzeit um 68 ns vor, wodurch die Systemzeiten der ersten Vorrichtung 18b und der zweiten Vorrichtung 14c synchronisiert sind.

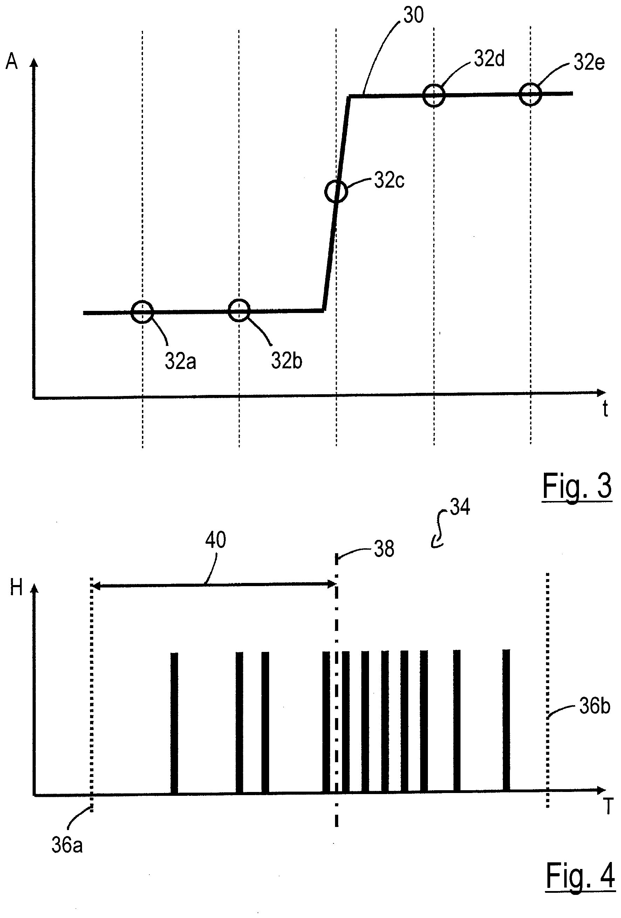

In Fig. 3 ist die Abtastung von Flanken verschiedener Datenbits eines Datensignals verdeutlicht, wie es beispielsweise von Datenübertragungseinheit 22 der zweiten Vorrichtung 14c empfangen wird. Dabei ist in einem Diagramm nach rechts die Zeit (t) und nach oben die Amplitude (A) des Datensignals angetragen. Die Abtastung der Flanken dient der genauen zeitlichen Erfassung der Position der Flanke, um aus der Position den Abstand der ersten und zweiten Vorrichtung 18b, 14c zu ermitteln. Das Datensignal wird von der Datenübertragungseinheit 22 sechzehnfach überabgetastet.

Ein ausschnittsweiser Signalverlauf 30 von Flanken von Datenbits eines Datensignals ist in Fig. 3 dargestellt, wobei der Signalverlauf 30 eine Vielzahl von periodisch wiederkehrenden Flanken repräsentiert, die nacheinander abgetastet werden. Die Flanken sind "übereinanderliegend" dargestellt, d.h. es ist nur eine Flanke sichtbar.

Die aufeinander folgenden Flanken werden an unterschiedlichen Positionen abgetastet. Eine erste Flanke wird an einem ersten Abtastzeitpunkt 32a abgetastet. Die darauffolgende Flanke wird an einem zweiten Abtastzeitpunkt 32b abgetastet, welcher gegenüber dem ersten Abtastzeitpunkt 32a verschoben ist. Die Verschiebung der Abtastzeitpunkte zwischen den Abtastzeitpunkten 32a, 32b erfolgt aufgrund der geringfügigen Unterschiede im Systemtakt der ersten Vorrichtung 18b und der zweiten Vorrichtung 14c, wobei im gezeigten Beispiel die erste Vorrichtung 18b in gleichen Intervallen Flanken sendet, sich der Abtastzeitpunkt aber nach jeder Flanke geringfügig verschiebt.

In Fig. 3 sind beispielhaft noch ein dritter Abtastzeitpunkt 32c, ein vierter Abtastzeitpunkt 32d und ein fünfter Abtastzeitpunkt 32e dargestellt, die jeweils zum vorhergehenden Abtastzeitpunkt geringfügig verschoben sind. Die Verschiebungen zwischen den Abtastzeitpunkten 32a bis 32e weisen jeweils den gleichen zeitlichen Betrag auf.

Zur Veranschaulichung sind in Fig. 3 nur fünf Abtastzeitpunkte 32a - 32e dargestellt, tatsächlich kann eine Flanke aber beispielsweise mit 1.024 verschiedenen Abtastzeitpunkten abgetastet werden, wobei dafür 1.024 aufeinanderfolgende Flanken verwendet werden.

Aufgrund der Abtastung an 1.024 verschiedenen Abtastzeitpunkten ergeben sich beispielsweise durch Messungenauigkeiten und Schwankungen im Sendezeitpunkt für die verschiedenen Abtastzeitpunkte verschiedene Häufigkeiten bei der Erkennung einer Flanke. Diese Häufigkeiten können statistisch ausgewertet werden, beispielsweise mittels eines Histogramms 34.

Ein solches Histogramm 34 ist in Fig. 4 gezeigt, wobei in dem Histogramm 34 auf der Abszisse die Zeit T zwischen zwei Abtastzeitpunkten der Datenübertragungseinheit 22 bei sechzehnfacher Überabtastung angetragen sind. Die Grenzen des Histogramms 34 sind durch eine linke Begrenzungslinie 36a und eine rechte Begrenzungslinie 36b dargestellt. Der zeitliche Abstand zwischen der linken und rechten Begrenzungslinie 36a, 36b entspricht dem 1.024-fachen zeitlichen Abstand zweier benachbarter Abtastzeitpunkte 32a - 32e von Fig. 3.

Auf der Ordinate des Histogramms 34 ist die Häufigkeit einer erkannten Flanke angetragen, wobei die Häufigkeit bei einmaliger Abtastung an je 1.024 verschiedenen Abtastzeitpunkten entweder Null oder Eins sein kann. Beispielhaft sind in Fig. 4 elf Abtastzeitpunkte dargestellt, an welchen eine Flanke erkannt wurde. Der Abstand zwischen der linken Begrenzungslinie 36a und dem jeweiligen Abtastzeitpunkt, an dem eine Flanke erkannt wurde, stellt den gemessenen Versatz dar.

Alternativ kann das Histogramm 34 eine Anzahl von Werten, d.h. "Bins", enthalten, wobei die Anzahl der Bins dem Grad der Überabtastung entspricht. Dabei kann das Histogramm 34 ausgewertet werden, wenn z.B. 1024 Abtastungen in das Histogramm 34 eingegangen sind.

Aus der Häufigkeit und der Position der erkannten Flanke kann der Schwerpunkt 38 des Histogramms 34 berechnet werden. Ein zeitlicher Versatz 40 zwischen der linken Begrenzungslinie 36a und dem Schwerpunkt 38 gibt die tatsächliche zeitliche Position der Flanke mit hoher Wahrscheinlichkeit an. Der zeitliche Versatz 40 wird dementsprechend auch als ermittelter Versatz bezeichnet.

Aus der Position der Flanke, d.h. aus dem ermittelten Versatz, oder aus einer Interpolation mehrerer ausgewerteter Histogramme kann abschließend die Position der zweiten Vorrichtung 14c und damit des Hängeförderers 12c mit sehr hoher Genauigkeit berechnet werden. Die Berechnung mit sehr hoher Genauigkeit setzt dabei auf einer groben Abstandsmessung anhand der absoluten Zeitdauer zwischen dem Aussenden des ersten Datenpakets und dem Empfang des zweiten Datenpakets auf.

Bezugszeichenliste

| 10 | Hängefördersystem |
| 12a, 12b, 12c | Hängeförderer |
| 14a, 14b, 14c | zweite Vorrichtung |
| 16 | Stromschiene |
| 18a, 18b | erste Vorrichtung |

| 20 | Steuereinheit |
| 22 | Datenübertragungseinheit |
| 24 | Kondensator |
| 26 | erstes Datensignal |
| 28 | zweites Datensignal |
| 30 | Signalverlauf |
| 32a | erster Abtastzeitpunkt |
| 32b | zweiter Abtastzeitpunkt |
| 32c | dritter Abtastzeitpunkt |
| 32d | vierter Abtastzeitpunkt |
| 32e | fünfter Abtastzeitpunkt |
| 34 | Histogramm |
| 36a, 36b | Begrenzungslinie |
| 38 | Schwerpunkt des Histogramms |
| 40 | zeitlicher Versatz |
| S1 | erste Nachricht der ersten Vorrichtung bzw. der damit übermittelte Sendezeitpunkt der ersten Nachricht der ersten Vorrichtung |
| S2 | erste Nachricht der zweiten Vorrichtung bzw. der damit übermittelte Sendezeitpunkt der ersten Nachricht der zweiten Vorrichtung |
| E1 | zweite Nachricht der ersten Vorrichtung bzw. der damit übermittelte Empfangszeitpunkt der ersten Nachricht der zweiten Vorrichtung an der ersten Vorrichtung |
| E2 | zweite Nachricht der zweiten Vorrichtung bzw. der damit übermittelte Empfangszeitpunkt der ersten Nachricht der ersten Vorrichtung an der zweiten Vorrichtung |

**Patentansprüche**

1. Verfahren zur simultanen Datenübertragung und Abstandsmessung entlang eines Kommunikationsmediums zwischen einer ersten Vorrichtung (18a, 18b) und zumindest einer zweiten Vorrichtung (14a, 14b, 14c), wobei

- die erste Vorrichtung (18a, 18b) und die zumindest eine zweite Vorrichtung (14a, 14b, 14c) jeweils eine Datenübertragungseinrichtung (22) und eine mit der Datenübertragungseinrichtung (22) gekoppelte Steuereinheit (20) aufweisen, wobei jede Steuereinheit (20) einen vorbestimmten Systemtakt aufweist,
- (i) von der ersten Vorrichtung (18a, 18b) an zumindest eine zweite Vorrichtung (14a, 14b, 14c) ein erstes Datenpaket und von der zweiten Vorrichtung (14a, 14b, 14c) an die erste Vorrichtung (18a, 18b) ein zweites Datenpaket übertragen wird oder (ii) von zumindest einer zweiten Vorrichtung (14a, 14b, 14c) an die erste Vorrichtung (18a, 18b) ein erstes Datenpaket und von der ersten Vorrichtung (18a, 18b) an die zweite Vorrichtung (14a, 14b, 14c) ein zweites Datenpaket übertragen wird und
- anhand der übertragenen Datenpakete der Abstand zwischen der ersten Vorrichtung (18a, 18b) und der zumindest einen zweiten Vorrichtung (14a, 14b, 14c) ermittelt wird,
- -die Vorrichtungen (14, 18) mittels eines Kommunikationsmediums (16) verbunden sind,

**dadurch gekennzeichnet, dass** der zeitliche Versatz von Flanken wenigstens eines der Datenpakete zu dem jeweiligen Systemtakt mehrmals gemessen wird,

die Bestimmung eines ermittelten Versatzes eine statistische Auswertung einer vorbestimmten Anzahl von Werten des gemessenen Versatzes der Flanken des Datenpakets zu dem Systemtakt umfasst und die statistische Auswertung die Zusammenfassung der vorbestimmten Anzahl von Werten des gemessenen Versatzes in einem Histogramm umfasst, wobei die Bestimmung des ermittelten Versatzes die Ermittlung des Schwerpunktes des Histogramms umfasst.

2. Verfahren nach Anspruch 1,
**dadurch gekennzeichnet, dass**
das erste und/oder das zweite Datenpaket vorbestimmte Daten enthält.

3. Verfahren nach zumindest einem der vorstehenden Ansprüche,
**dadurch gekennzeichnet, dass**
der Systemtakt der ersten Vorrichtung (18a, 18b) und der Systemtakt der zweiten Vorrichtung (14a, 14b, 14c) zeitlich gegeneinander verschoben werden, insbesondere durch eine Auswahl unterschiedlicher Frequenzen für die Systemtakte der ersten und zweiten Vorrichtung (18, 14).

4. Verfahren nach zumindest einem der vorstehenden Ansprüche,
**dadurch gekennzeichnet, dass**
das übertragene erste und/oder zweite Datenpaket beim Empfang in der ersten und/oder der zweiten Vorrichtung (18, 14) mit einer Verzögerung versehen wird.

5. Verfahren nach Anspruch 3 oder 4,
**dadurch gekennzeichnet, dass**
die Größe der zeitlichen Verschiebung und/oder die Länge der Verzögerung während der Durchführung des Verfahrens geändert werden.

6. Verfahren nach zumindest einem der vorstehenden Ansprüche,

**dadurch gekennzeichnet, dass**

ein von der Datenübertragungseinrichtung (22) empfangenes Datenpaket überabgetastet wird, insbesondere zumindest achtfach, bevorzugt zumindest sechzehnfach.

7. Verfahren nach einem der Ansprüche 1 bis 6,
**dadurch gekennzeichnet, dass**
die Bestimmung des ermittelten Versatzes die Berechnung einer linearen Regression zwischen den Schwerpunkten zweier oder mehrerer Histogramme umfasst.

8. Verfahren nach zumindest einem der vorstehenden Ansprüche,
**dadurch gekennzeichnet, dass**
eine Übertragungsgeschwindigkeit des Kommunikationsmediums (16) und insbesondere der Dielektrizitätswert des Kommunikationsmediums (16) ermittelt wird.

9. Verfahren nach zumindest einem der vorstehenden Ansprüche,
**dadurch gekennzeichnet, dass**
der Abstand zwischen der ersten Vorrichtung (18a, 18b) und der zweiten Vorrichtung (14a, 14b, 14c) von der ersten Vorrichtung (18a, 18b) und von der zweiten Vorrichtung (14a, 14b, 14c) ermittelt wird.

10. Verfahren nach zumindest einem der vorstehenden Ansprüche ,
**dadurch gekennzeichnet, dass**
vor der Ermittlung des Abstandes zwischen der ersten Vorrichtung (18a, 18b) und der zweiten Vorrichtung (14a, 14b, 14c) die Systemzeiten der Vorrichtungen (18, 14) synchronisiert werden, wobei zur Synchronisierung der Systemzeiten von der ersten und der zweiten Vorrichtung (18a, 18b, 14a, 14b, 14c) an die jeweils andere Vorrichtung (18a, 18b, 14a, 14b, 14c)

eine erste Nachricht (S1, S2), welche ihren Sendezeitpunkt bezüglich der Systemzeit der jeweils sendenden Vorrichtung (18a, 18b, 14a, 14b, 14c) enthält, und
eine zweite Nachricht (E1, E2), welche den Empfangszeitpunkt der ersten Nachricht (S1, S2) bezüglich der jeweils die erste Nachricht (S1, S2) empfangenden Vorrichtung (18a, 18b, 14a, 14b, 14c) enthält, versandt werden.

11. Verfahren nach Anspruch 10,
**dadurch gekennzeichnet, dass**
ein Versatz der Systemzeiten der ersten und der zweiten Vorrichtung (18a, 18b, 14a, 14b, 14c) nach der Formel [(E2 - S1) + (S2 - E1)] / 2 berechnet wird, wobei S1 und S2 Sendezeitpunkte und E1 sowie E2 Empfangszeitpunkte bezeichnen.

12. Verfahren nach Anspruch 11,
**dadurch gekennzeichnet, dass**
die Systemzeit der ersten oder der zweiten Vorrichtung (18a, 18b, 14a, 14b, 14c) um den Versatz korrigiert wird.

13. Verfahren nach zumindest einem der vorstehenden Ansprüche,
**dadurch gekennzeichnet, dass**
der Abstand zwischen mehreren zweiten Vorrichtungen (14a, 14b, 14c) und/oder zwischen mehreren zweiten Vorrichtungen (14a, 14b, 14c) und der ersten Vorrichtung (18a, 18b) bestimmt wird,
eine Plausibilisierung der Abstände vorgenommen wird und
ein sicherer Positionswert für eine zweite Vorrichtung (14a, 14b, 14c) ermittelt wird.

**Claims**

1. A method for simultaneous data transmission and distance measurement along a communication medium between a first apparatus (18a, 18b) and at least one second apparatus (14a, 14b, 14c), wherein

- the first apparatus (18a, 18b) and the at least one second apparatus (14a, 14b, 14c) each have a data transmission device (22) and a control unit (20) coupled to the data transmission device (22), with each control unit (20) having a predetermined system clock;
- (i) a first data packet is transmitted from the first apparatus (18a, 18b) to at least one second apparatus (14a, 14b, 14c) and a second data packet is transmitted from the second apparatus (14a, 14b, 14c) to the first apparatus (18a, 18b) or (ii) a first data packet is transmitted from at least one second apparatus (14a, 14b, 14c) to the first apparatus (18a, 18b) and a second data packet is transmitted from the first apparatus (18a, 18b) to the second apparatus (14a, 14b, 14c);
- the distance between the first apparatus (18a, 18b) and the at least one second apparatus (14a, 14b, 14c) is determined using the transmitted data packets; and
- the apparatus (14, 18) are connected by means of a communication medium (16),

**characterized in that**

the time offset of edges of at least one of the data packets from the respective system clock is measured a multiple of times;
**in that** the determination of a determined offset comprises a statistical evaluation of a predetermined number of values of the measured offset of the edges of the data packet from the system clock; and
**in that** the statistical evaluation comprises the combination of the predetermined number of values of the measured offset in a histogram, with the determination of the determined offset comprising the determination of the barycenter of the histogram.

2. A method in accordance with claim 1,
**characterized in that**
the first data packet and/or the second data packet includes/include predetermined data.

3. A method in accordance with at least one of the preceding claims,
**characterized in that**
the system clock of the first apparatus (18a, 18b) and the system clock of the second apparatus (14a, 14b, 14c) are displaced in time with respect to one another, in particular by a selection of different frequencies for the system clocks of the first and second apparatus (18, 14).

4. A method in accordance with at least one of the preceding claims,
**characterized in that**
the transmitted first data packet and/or second data packet is/are provided with a delay on the reception in the first and/or second apparatus (18, 14).

5. A method in accordance with claim 3 or claim 4,
**characterized in that**
the amount of the time displacement and/or the length of the delay is/are changed during the carrying out of the method.

6. A method in accordance with at least one of the preceding claims,
**characterized in that**
a data packet received from the data transmission device (22) is oversampled, in particular at least eight times, preferably at least sixteen times.

7. A method in accordance with any one of the claims 1 to 6,
**characterized in that**
the determination of the determined offset comprises the calculation of a linear regression between the barycenters of two or more histograms.

8. A method in accordance with at least one of the preceding claims,
**characterized in that**
a transmission speed of the communication medium (16) and in particular the dielectricity value of the communication medium (16) are determined.

9. A method in accordance with at least one of the preceding claims,
**characterized in that**
the distance between the first apparatus (18a, 18b) and the second apparatus (14a, 14b, 14c) is determined by the first apparatus (18a, 18b) and by the second apparatus (14a, 14b, 14c).

10. A method in accordance with at least one of the preceding claims,
**characterized in that**
the system times of the apparatus (18, 14) are synchronized before the determination of the distance between the first apparatus (18a, 18b) and the second apparatus (14a, 14b, 14c), wherein, for the synchronization of the system times of the first and second apparatus (18a, 18b, 14a, 14b, 14c),

a first message (S1, S2), which includes its transmission point in time with respect to the system time of the respective transmitting apparatus (18a, 18b, 14a, 14b, 14c), and
a second message (E1, E2), which includes the reception point in time of the first message (S1, S2) with respect to the respective apparatus (18a, 18b, 14a, 14b, 14c) receiving the first message (S1, S2),

are transmitted to the respective other apparatus (18a, 18b, 14a, 14b, 14c).

11. A method in accordance with claim 10,
**characterized in that**
an offset of the system times of the first and second apparatus (18a, 18b, 14a, 14b, 14c) is calculated in accordance with the formula $[(E2 - S1) + (S2 - E1)] / 2$, with S1 and S2 designating transmission points in time and E1 and E2 designating reception points in time.

12. A method in accordance with claim 11,
**characterized in that**
the system time of the first or second apparatus (18a, 18b, 14a, 14b, 14c) is corrected by the offset.

13. A method in accordance with at least one of the preceding claims,
**characterized in that**
the distance between a plurality of second apparatus (14a, 14b, 14c) and/or between a plurality of second apparatus (14a, 14b, 14c) and the first apparatus (18a, 18b) is determined;
a validation of the distances is carried out; and
a safe position value for a second apparatus (14a, 14b, 14c) is determined.

## Revendications

1. Procédé de transmission de données et de mesure de distance simultanées le long d'un moyen de communication entre un premier dispositif (18a, 18b) et au moins un second dispositif (14a, 14b, 14c), dans lequel

   - le premier dispositif (18a, 18b) et ledit au moins un second dispositif (14a, 14b, 14c) comprennent chacun un moyen de transmission de données (22) et une unité de commande (20) couplée au moyen de transmission de données (22), chaque unité de commande (20) présentant une horloge système prédéterminée,
   - (i) un premier paquet de données est transmis du premier dispositif (18a, 18b) à au moins un second dispositif (14a, 14b, 14c) et un second paquet de données est transmis du second dispositif (14a, 14b, 14c) au premier dispositif (18a, 18b), ou (ii) un premier paquet de données est transmis d'au moins un second dispositif (14a, 14b, 14c) au premier dispositif (18a, 18b) et un second paquet de données est transmis du premier dispositif (18a, 18b) au second dispositif (14a, 14b, 14c), et
   - en se basant sur les paquets de données transmis, on détermine la distance entre le premier dispositif (18a, 18b) et ledit au moins un second dispositif (14a, 14b, 14c),
   - les dispositifs (14, 18) sont reliés par un moyen de communication (16), **caractérisé en ce que**

   on mesure plusieurs fois le décalage temporel des fronts de l'un au moins des paquets de données par rapport à l'horloge système respective, la définition d'un décalage déterminé inclut une évaluation statistique d'un nombre prédéfini de valeurs du décalage mesuré des fronts du paquet de données par rapport à l'horloge système, et l'évaluation statistique inclut le regroupement du nombre prédéfini de valeurs du décalage mesuré dans un histogramme, la définition du décalage déterminé incluant la détermination du barycentre de l'histogramme.

2. Procédé selon la revendication 1, **caractérisé en ce que** le premier et/ou le second paquet de données comprend des données pré-définies.

3. Procédé selon l'une des revendications précédentes, **caractérisé en ce que** l'horloge système du premier dispositif (18a, 18b) et l'horloge système du second dispositif (14a, 14b, 14c) sont décalées dans le temps l'une par rapport à l'autre, en particulier par une sélection de différentes fréquences pour les horloges systèmes des premier et second dispositifs (18, 14).

4. Procédé selon l'une des revendications précédentes, **caractérisé en ce que** le premier et/ou le second paquet de données transmis est pourvu d'un retard lors de la réception dans le premier et/ou dans le second dispositif (18, 14).

5. Procédé selon la revendication 3 ou 4, **caractérisé en ce que** l'importance du décalage dans le temps et/ou la durée du retard sont modifiées pendant la mise en oeuvre du procédé.

6. Procédé selon l'une au moins des revendications précédentes, **caractérisé en ce que** un paquet de données reçu par le dispositif de transmission de données (22) est suréchantillonné, en particulier au moins huit fois, de préférence au moins seize fois.

7. Procédé selon l'une des revendications 1 à 6, **caractérisé en ce que** la définition du décalage déterminé inclut le calcul d'une régression linéaire entre les barycentres de deux ou de plusieurs histogrammes.

8. Procédé selon l'une au moins des revendications précédentes, **caractérisé en ce que** on détermine la vitesse de transmission du moyen de communication (16) et en particulier la constante diélectrique du moyen de communication (16).

9. Procédé selon l'une au moins des revendications précédentes, **caractérisé en ce que** on détermine la distance entre le premier dispositif (18a, 18b) et le second dispositif (14a, 14b, 14c) depuis le premier dispositif (18a, 18b) et depuis le second dispositif (14a, 14b, 14c).

10. Procédé selon l'une au moins des revendications précédentes, **caractérisé en ce que** avant la détermination de la distance entre le premier dispositif (18a, 18b) et le second dispositif (14a, 14b, 14c), les heures de système des dispositifs (18, 14) sont synchronisées, et pour la synchronisation des heures de système des premier et second dispositifs (18a, 18b, 14a, 14b, 14c), on envoie à l'autre dispositif respectif (18a, 18b, 14a, 14b, 14c)

   un premier message (S1, S2) qui comprend son instant d'émission par rapport à l'heure de système du dispositif respectif (18a, 18b, 14a, 14b, 14c) qui l'envoie, et

un second message (E1, E2) qui comprend l'instant de réception du premier message (S1, S2) par rapport au dispositif respectif (18a, 18b, 14a, 14b, 14c) qui reçoit le premier message (S1, S2).

11. Procédé selon la revendication 10,
**caractérisé en ce que**
un décalage des heures de système des premier et second dispositifs (18a, 18b, 14a, 14b, 14c) est calculé selon la formule [(E2 - S1) + (S2 - E1)] / 2, dans laquelle S1 et S2 désignent des instants d'émission, et E1 ainsi que E2 désignent des instants de réception.

12. Procédé selon la revendication 11,
**caractérisé en ce que**
l'heure de système du premier ou du second dispositif (18a, 18b, 14a, 14b, 14c) est corrigée du décalage.

13. Procédé selon l'une au moins des revendications précédentes,
**caractérisé en ce que**
on définit la distance entre plusieurs seconds dispositifs (14a, 14b, 14c) et/ou entre plusieurs seconds dispositifs (14a, 14b, 14c) et le premier dispositif (18a, 18b),
on procède à un contrôle de plausibilité des distances, et
on détermine une valeur de position sûre pour le second dispositif (14a, 14b, 14c).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008059819 B4
- US 6765495 B1
- WO 9960629 A
- EP 1980870 A1
- US 20140009340 A1

- EP 2244098 B1
- WO 2007066859 A1
- WO 2006051119 A1
- US 20130141283 A1

**In der Beschreibung aufgeführte Nicht-Patentliteratur**

- **JINGJING XIA et al.** *3-5 GHz UWB Impulse Radio Transmitter and Receiver MMIC Optimized for Long Range Precision Wireless Sensor Networks*